# EUROPEAN PATENT APPLICATION

(11) **EP 2 341 733 A1**
(43) Date of publication of application: **06.07.2011**
(21) Application number: 09306353.5
(22) Date of filing: 30.12.2009
(51) Int. Cl.: H04W 40/24, H04W 8/08, H04W 88/08

(54) **Local data routing in a mobile network**

(71) Applicant: Mitsubishi Electric R&D Centre Europe B.V., 1119 NS Schiphol Rijk Amsterdam (NL); Mitsubishi Electric Corporation, Chiyoda-ku Tokyo 100-8310 (JP)
(72) Inventor: Rollet, Romain, 35590 L'Hermitage (FR)
(74) Representative: Cabinet Plasseraud

(57) **Abstract**

In a mobile network having a core network and a home network corresponding to at least one home NodeB, said core network and said home NodeB being linked through a routing module, packets are transmitted in the mobile network through uplink bearers or downlink bearers. Each transmitted packet is associated, on one hand, to a quintuplet indicating a source IP address, a destination IP address, a source IP port, a destination IP port, and a type of transport protocol used over IP, and, on the other hand, to an uplink or downlink bearer through which the packet is received. Based on received packets, the routing module updates a table adapted to store quintuplets in association to respective uplink and downlink bearers. Upon reception of a packet from the home Node B (21), if the quintuplet associated to this received packet is already stored in the table (22) with an associated downlink bearer (23), performing (24) a local routing by forwarding the received packet through said associated downlink bearer.

## Description

### 1. Technical Field

The present invention relates generally to a mobile network and, more particularly, to the management of data routing.

### 2. Related Art

LTE (for 'Long Term Evolution') architecture defines a mobile network architecture (3GPP for 'Third Generation Partnership Project', Release 9).

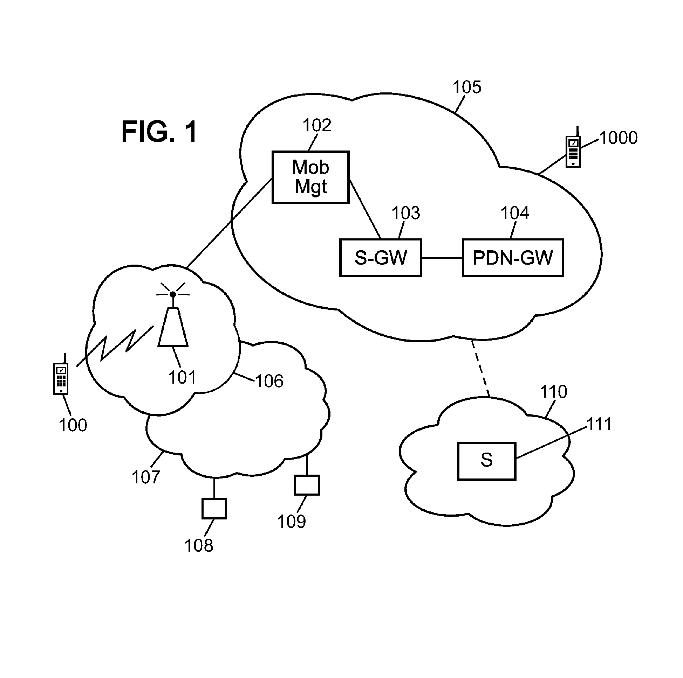

Figure 1 illustrates a network according to this type of architecture. In this network, a control plane and a data plane are handled separately. It comprises a core network part 105 and a home network part, or HAN (for 'Home Area Network') 106. The core network 105 includes a Mobility Management Entity 102 (MME), a Serving Gateway 103 (S-GW) and a Packet Data Network Gateway 104 (PDN-GW). The PDN-GW 104 can be linked to an internet network 110 which can comprise a server 111.

The home network 106 includes a home NodeB 101.

Because of lack of signalling information at higher level, the home NodeB systematically forwards uplink data traffic to the core network 105, even if this data traffic is intended to a device located in the same HAN 106 as the terminal transmitting the data traffic.

Consequently, performing a data packet routing at the core network level does not allow optimizing management of transmission resources in some conditions.

### SUMMARY OF THE INVENTION

A first aspect of the present invention proposes a method for routing IP packets in a mobile network, the mobile network having a core network and a home network corresponding to at least one home NodeB, said core network and said home NodeB being linked through a routing module;
packets being transmitted in the mobile network through uplink bearers or downlink bearers;
each transmitted packet being associated, on one hand, to a quintuplet indicating a type of transport protocol used over IP, a source and destination IP addresses, and a source and destination IP ports, and, on the other hand, to an uplink or downlink bearer through which said packet is received;
based on received packets, the routing module updating a table adapted to store quintuplets in association to respective uplink and downlink bearers;
said method comprising the following steps at said routing module:
/a/ receiving a packet from the home Node B; and
/b/ if the quintuplet associated to said received packet is already stored in the table with an associated downlink bearer, performing a local routing by forwarding the received packet through said associated downlink bearer.

The 'source and destination IP ports' correspond to source and destination ports used by the transport protocol.

In the mobile network considered here, IP packets can be transmitted between different devices or terminals or UEs (for 'User Equipments'). These IP packets are transported through successive bearers from one UE to another one. At a given point in the mobile network, an IP packet is associated to the quintuplet as stated above (source IP address and port, and destination IP address and port and the used transport protocol). More precisely, a quintuplet corresponds to an IP connection, meaning to an IP communication between two User Equipments (UE). A connection is used in this context to refer any type of communication over IP protocol, like UDP or TCP for instance.

Moreover, in order to handle the transmission inside the mobile network, a transmitted packet is also associated to a bearer, which can be a downlink bearer when the packet is transmitted on downlink, meaning from the core network to the home network, or an uplink bearer when the packet is transmitted on uplink, meaning from the home network to the core network. All these bearers are identified through their respective identifiers.

It is advantageously planned to maintain a table for storing these associations between quintuplets on one side and the associated bearers on the other side, which can be a downlink bearer if the packet is received on downlink or uplink bearer if the packet is received on uplink. Thus, when a packet is received from the home NodeB, it is possible to determine the bearer (S1 bearer) on which is transmitted. This bearer corresponds to the uplink bearer. Moreover, when a packet is received from the core network, it is possible to determine the S1 bearer on which is transmitted, meaning the downlink bearer. Stated otherwise, a connection at a given point in this mobile network corresponds to a quintuplet associated to a downlink bearer and an uplink bearer and this information can be extracted from some packets of a connection in order to store it in the table at the routing module.

The table can be updated dynamically upon reception of different received packets either on downlink or on uplink. The association to the corresponding bearers is preferably stored by their respective identifiers.

Whatever the mechanism carried out to perform a dynamic updating of this table, when a packet is received on uplink from the home NodeB, if a downlink bearer is indicated in the table in association to the quintuplet of the received packet, then the received packet is routed locally to the recipient through the downlink bearer indicated in the table in association to the considered quintuplet. In these conditions, it is possible to avoid forwarding to the core network the received packets of a local connection. Thus, advantageously, the data traffic emitted from the same home network wherein the recipient UE is located can be locally routed at the routing module, avoiding going through the core network before coming back to the home network of the transmission.

Such a local routing can be carried out at the routing module according to one embodiment of the present invention.

The terms 'routing module' correspond to any network entity located between the home network and the core network able to perform data packet routing according to one embodiment of the present invention. This entity can be located at a Home NodeB of the home network for instance or anywhere after the home NodeB and before the core network.

A home network can include a plurality of Home NodeBs. In this condition, it is possible to plan to locate this routing module at a higher level in the network architecture, above the Home NodeBs, in order to make this routing module able to handle a plurality of home NodeBs. In this case, a local routing could be performed as soon as two devices belonging to this plurality of home NodeBs have a communication together. Such a routing module could be referenced as a kind of home NodeBs concentrator. When the routing module is in charge of handling the received packets from a plurality of home NodeBs, it can perform a local routing which corresponds to the plurality of home NodeBs.

In these conditions, it is possible to route some packets provided from a home network early in the mobile network and, for many reasons, it may be interesting. More precisely, the data traffic, intended to a receiving device located in the same home network as the transmitting device, can be advantageously routed locally in order to avoid the routing step at the core network level. Such a local routing is not possible in the architecture of the prior art as described above.

This local routing is made possible here thanks to a table, which is a routing table, adapted to store the quintuplet which is associated to a transmitted packet and the corresponding bearer, such association allowing performing a local routing when two UEs of a same home network are in communication. Indeed, keeping in memory some information extracted when packets transit through the routing module allows performing a local switching according to the present invention.

Thanks to one embodiment of the present invention, delays can be advantageously reduced and bandwidth can be advantageously increased.

In one embodiment of the present invention, at step /b/, if the quintuplet associated to the received packet is not already stored in the table with an associated downlink bearer, the received packet is forwarded to the core network through the uplink bearer associated to the received packet.

Indeed, when no information is available in the table regarding a possible downlink bearer already associated to a received packet on uplink, this packet is forwarded to the core network as in the prior art, by default. Indeed, in this case, it is not possible to know if this received packet is intended to the home nodeB or to another home NodeB which is not handled by this routing module. But, it is important to note here the fact that, if this received packet is intended to the home NodeB, it will be forwarded again from the core network to this home NodeB via the routing module, on downlink, as it is done in the prior art. Indeed, in this case, the routing is performed at the core network level, which will decide to forward this packet to the same home NodeB. Then, the routing module will receive the same packet again but on downlink. In these conditions, it is easy for the routing module to detect if the packet received on downlink corresponds to a known quintuplet in the table. If it is the case, and if no downlink bearer is yet stored in association to this quintuplet, the downlink bearer associated to the received packet can be stored in the table at this step.

Then, as soon as, the first IP packet is forwarded back to the home NodeB through the routing module, the table can be updated by storing the downlink bearer corresponding to the quintuplet of the received packet, in order to make a local routing able for this connection. But, while no downlink bearer is associated to a given quintuplet, all received packets on uplink are forwarded to the core network as in the prior art.

In one embodiment of the present invention, the routing module updates the table according to the following steps:
/i/ upon reception of a packet from the home NodeB and if the quintuplet associated to said received packet is not already stored in the table, storing this quintuplet as a new entry of the table in association with the uplink bearer associated to the received packet;
/ii/ upon reception of a packet from the core network and if the quintuplet associated to said received packet is already stored in the table, storing the downlink bearer associated to said received packet in association to said quintuplet in the table.

Thanks to theses characteristics, the routing module is able to maintain an updated table indicating all information to allow a local routing of IP packets directed to a UE which is local to the routing module.

In one embodiment, the routing module is able to received IP packets from a plurality of home NodeBs; each of said IP packets comprising a corresponding GTP-U packet and
wherein, at step /a/, the packet is received from a first home NodeB of said plurality and, at step /b/, the packet is forwarded towards a second home NodeB of said plurality, on the basis of a Tunnel End point Identifier and an IP address indicated the corresponding GTP-U packet.

A Tunnel End point Identifier and an IP address indicated the corresponding GTP-U packet allow identifying a bearer.

In this case, advantageously, the routing module is in charge of local routing for a plurality of home NodeBs. Thus, when a UE of one of these home NodeBs communicates with a UE of another one of these home NodeBs, the data traffic between them can be advantageously routed at the routing module level, avoiding going through the core network.

In one embodiment of the present invention, the table further comprises a Time field in association to each quintuplet, said Time field being updated for a given quintuplet with a current time reference each time a packet associated to said given quintuplet is received at the routing module; and a quintuplet is removed from the table when the corresponding Time field indicates a current time older than a determined value.

Thanks to these characteristics, it is advantageously possible to clean the table easily when a connection becomes inactive. For some transport protocols like UDP, it is difficult to clean up this table upon types of packets. Handling such a Time field allows managing correctly the information in the table in order to store only information relative to an active connection. A determined value can be defined easily depending on the type of transport protocol and/or on the type of IP communication.

The present invention can be applied to packets received according to TCP protocol. In this case, a quintuplet indicates the TCP protocol as type of transport protocol; and a downlink bearer and an uplink bearer are stored in the table in association to a quintuplet only upon reception of SYN or SYN ACK packets on downlink and on uplink.

Thus, it is possible to reduce the number of operations and to decrease the power consumption by checking only received SYN packets for updating the table.

It is possible to plan to remove a quintuplet from the table, meaning removing an entry from the table, upon reception of a FIN or RST packet associated with the quintuplet. Indeed, in case of TCP protocol, FIN and RST packet corresponds to the end of a connection. Anyway, even in the case of TCP protocol, it could be useful to handle a Time field in the table in case of error.

In one embodiment of the present invention, the method further comprises the following step before performing the local routing:
- sending a message informing the core network about said local routing.

Thanks to this characteristic, the core network is informed about local routing for any connections and then it is possible to save transmission resources in the mobile network.

In one embodiment of the present invention, the method further comprises the following step before performing the local routing:
- sending to the core network a message requesting if said local routing is allowed;
- receiving a response message indicating if said local routing is allowed;
   wherein local routing is performed only if core network allows it.

Here, the core network can control local routing. Indeed, it can decide to allow or to forbid a local routing. For some applications it can be useful to plan to make such a control on local routing.

A second aspect of the present invention proposes a routing module adapted to be included in a home NodeB in order to route packets according to a method for routing of the first aspect of the present invention.

A third aspect of the present invention proposes a home NodeB comprising a routing module according to the second aspect of the present invention.

A forth aspect of the present invention proposes a mobile network comprising a routing module according to the second aspect of the present invention.

### BRIEF DESCRIPTION OF THE DRAWINGS

Further features and advantages of the present invention will become more apparent from the description below. This is given purely by way of illustration and should be read in conjunction with the appended drawings, of which:
Figure 1 illustrates an architecture of a mobile network according to a prior art, as already described.
Figure 2-A illustrates a mobile network according to one embodiment of the present invention.
Figure 2-B illustrates the main steps performed by a method of packet routing according to one embodiment of the present invention.
Figure 3 illustrates architecture of a mobile network in detail, wherein one embodiment of the present invention can be applied.
Figure 4 illustrates a home network comprising a plurality of home NodeBs.
Figure 5 illustrates the different type of bearers used according to one embodiment of the present invention.
Figure 6 illustrates the different protocol stacks for the data plane in LTE architecture according to one embodiment of the present invention.
Figure 7 is a schema to illustrate a mechanism of a local data routing integrated in a Home Node B according to an embodiment of the present invention.
Figure 8 illustrates a method for routing IP packets of UDP protocol according to one embodiment of the present invention.
Figure 9 illustrates a method for routing IP packets of TCP protocol according to one embodiment of the present invention.
Figure 10 illustrates a routing module according to one embodiment of the present invention.

### DESCRIPTION OF PREFERRED EMBODIMENTS

The present invention is described herein below in one exemplary application to a LTE architecture of network. But, it is easy to apply the same principles to other types of network.

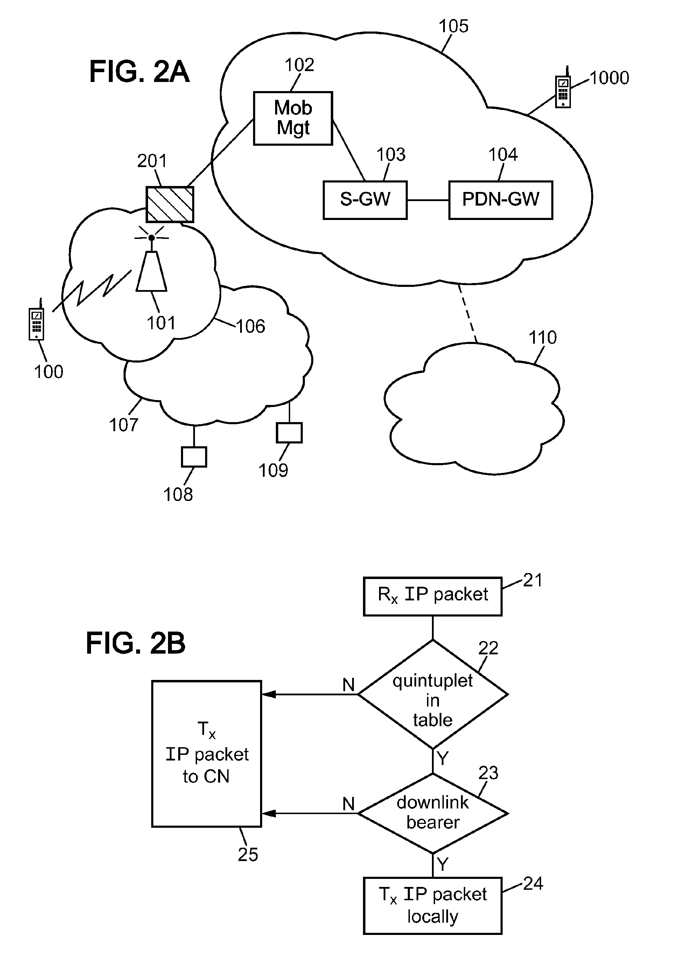

Figure 2-A illustrates a mobile network according to one embodiment of the present invention. This mobile network corresponds to the network illustrated in reference to figure 1. But, in addition, a routing module 201 is included between the home network 106 and the core network 105 in order to carry out the steps of the method according to one embodiment. This routing module 201 is able to received IP packets from the home network 106 on uplink, and from the core network on downlink. For all IP packets transiting through it, it is able to decide if a local routing is required or not according to a mechanism of the present invention. For that purpose the routing module is in charge of updating a table storing an association of a quintuplet and downlink and uplink bearers which correspond to this quintuplet, for a given communication.

Figure 2-B illustrates the main steps performed by a method of IP packet routing in a mobile network according to one embodiment of the present invention. In this mobile network, a packet is associated to a quintuplet indicating a source IP address and IP port, a destination IP address and IP port and an indication relative to the used transport protocol.

At a step 21, when the routing module 201 receives an IP packet from the home Node B, meaning on uplink, it is able to take a routing decision based on information stored in its table.

More precisely, at a step 22, it checks if the quintuplet associated to the received packet corresponds to an existing entry in the table, meaning if this quintuplet is already stored in this table. If it is the case, it checks if a downlink bearer is already associated to this quintuplet in the table, at a step 23. If these two checks are positive, at a step 24, the received packet is then transmitted through the downlink bearer indicated in the table in association to the considered quintuplet. If at least one of these both checks is negative, at a step 25, the received packet is transmitted to the core network (or CN).

Different types of bearers are used at different places in the architecture according to LTE. It is planned to use Radio bearer between UE and home NodeB and S1 bearer from the home NodeB towards the core network. Thus, the home NodeB corresponds to a mapping procedure between radio bearer and S1 bearer, as it will be detailed in some following sections. The routing module is located between the mapping procedure of the home NodeB and the Core Network. Consequently, the routing module manipulates only one type of bearer which is S1 bearer.

The following sections describe in detail an application of the present invention to an existing architecture LTE.

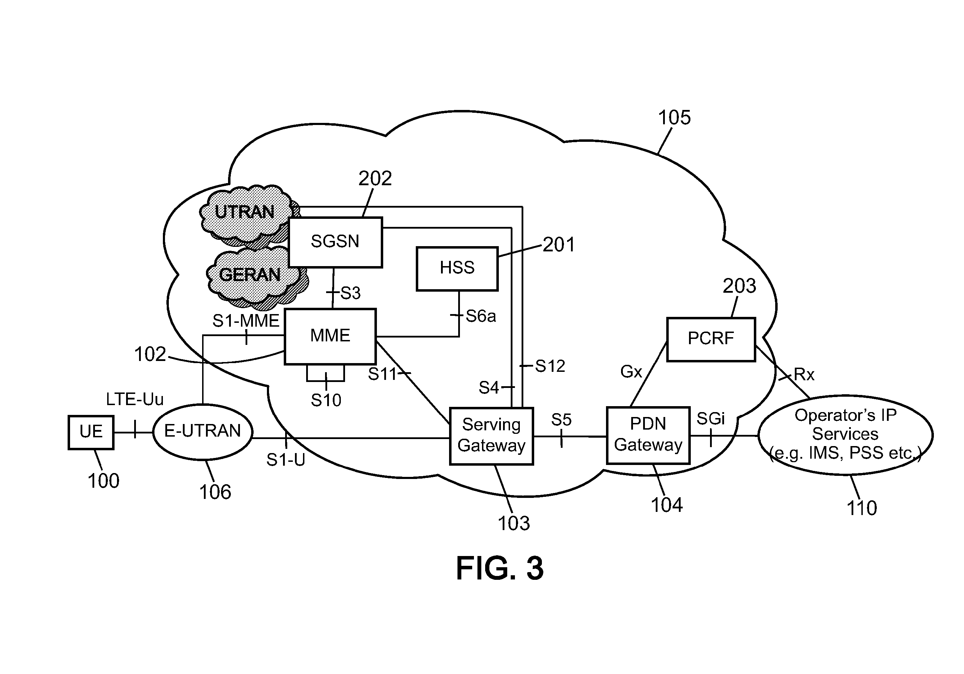

Figure 3 illustrates architecture of a mobile network in detail, wherein one embodiment of the present invention can be applied.

A mobile terminal, or UE for 'User Equipment', can access to the core network 105 via a home network 106. The home network 106 corresponds to E-UTRAN, for 'Evolved Universal Terrestrial Radio Access Network', which is an access part of the network.

This type of architecture is based on a data plane for handling data exchange and on a control plane for handling signalling exchange.

The core network 105 comprises the Mobility Management Entity MME 102, which is a control node in charge of handling mobility and security for mobile terminals (UEs). MME 102 is a contact point for the control plane of the UE. When the UE 100 is moving in the access network, another MME can be involved.

The core network comprises also the Serving Gateway (S-GW) 103, which is the contact point for the data plane of the UE. The Serving Gateway can stay the same even if the UE is moving in the access network.

The core network 105 comprises the PDN Gateway 104, which is a contact point between the mobile network, LTE network, and the Internet network 110. Generally, the PDN GW 104 is in charge of handling IP addresses.

The core network can further comprise a Home Subscriber Server 201 (HSS), which is a central node that mainly contains subscription and parameters information for UEs, and a Serving GPRS Support Node (SGSN) 202, which is in charge of handling data exchange with 3G and GSM networks. This core network can comprise too a Policy and Charging Rules Function 203 (PCRF) in charge of charging sessions handled in this network.

According to LTE standard, the interface:
- between the access network (or home network) 106 and the MME 102 is referred as S1-MME interface;
- between the MME 102 and the SGSN 202 is referred as S3;
- between the MME 102 and the Serving GW 103 is referred as S11;
- between the MME 102 and the HSS 201 is referred as S6a;
- between the SGW 103 and the PDN GW 104 is referred as S5;
- between the PDN GW 104 and the Internet network 110 is referred as SGi:
- between the PDN GW 104 and the PCRF 203 is referred as Gx;
- between the PCRF 203 and the internet network 110 is referred as Rx.

According to one embodiment of the present invention, a routing module 201 is adapted to be an interface to S1 bearer interfaces on one side, and to at least one home NodeB of a home network on the other side.

The home network part can contain several home NodeBs.

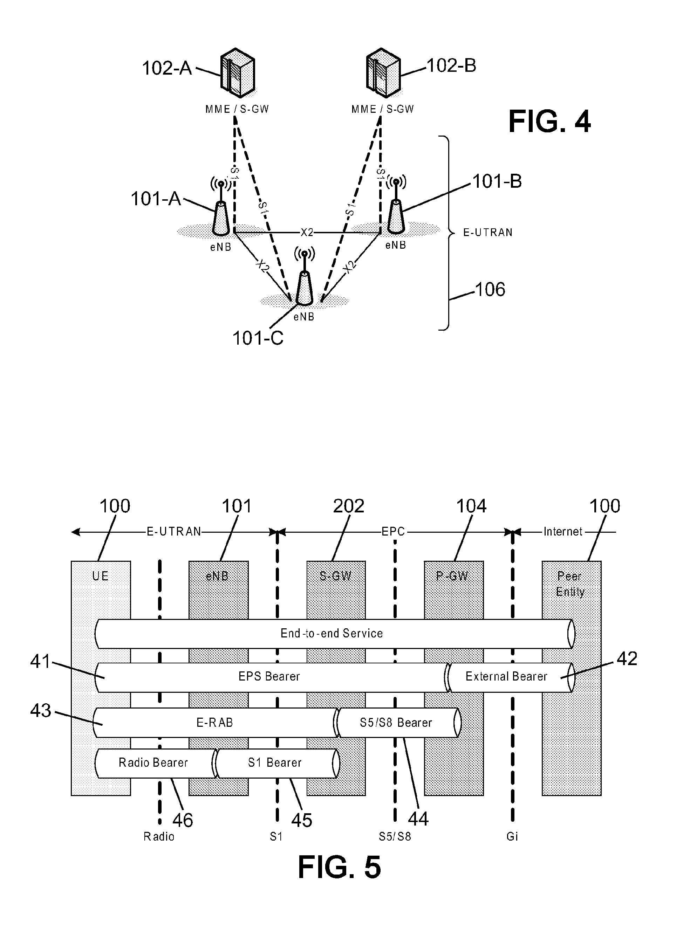

Figure 4 illustrates an E-UTRAN network 106 comprising three home NodeBs 101-A, 101-B and 101-C. The home NodeB 101-A and 101-B are linked to an MME 102-A, and the home NodeB 101-B and 101-C are linked to an MME 102-B.

It shall be noted that, generally, Home NodeBs do not implement links of type X2, unlike NodeBs. A plurality of bearers is defined in order to support transmission through the network.

Figure 5 illustrates in detail different bearers which can be used according to one embodiment of the present invention. An end-to-end service between two distant mobile terminals is based on an EPS bearer 41, between UE 100 and the P-GW 104, and an External Bearer 42, between P-GW 104 and the other mobile terminal UE 100.

The EPS bearer 41 is composed of a bearer E-RAB (for 'Evolved Radio Access Bearer') 43 between the UE 100 and the S GW 202, and of a bearer S5/S8 bearer 44, between the S-GW 202 and the P-GW 104.

More precisely, the E-RAB bearer 43 is composed of a Radio bearer 46 between the UE 100 and the home NodeB 101, and of a S1 bearer 45 between the home NodeB and the S-GW 202.

In one embodiment of the present invention, when a UE enters in the mobile network, a default bearer is created. It is also possible to create some additional dedicated bearers at this step.

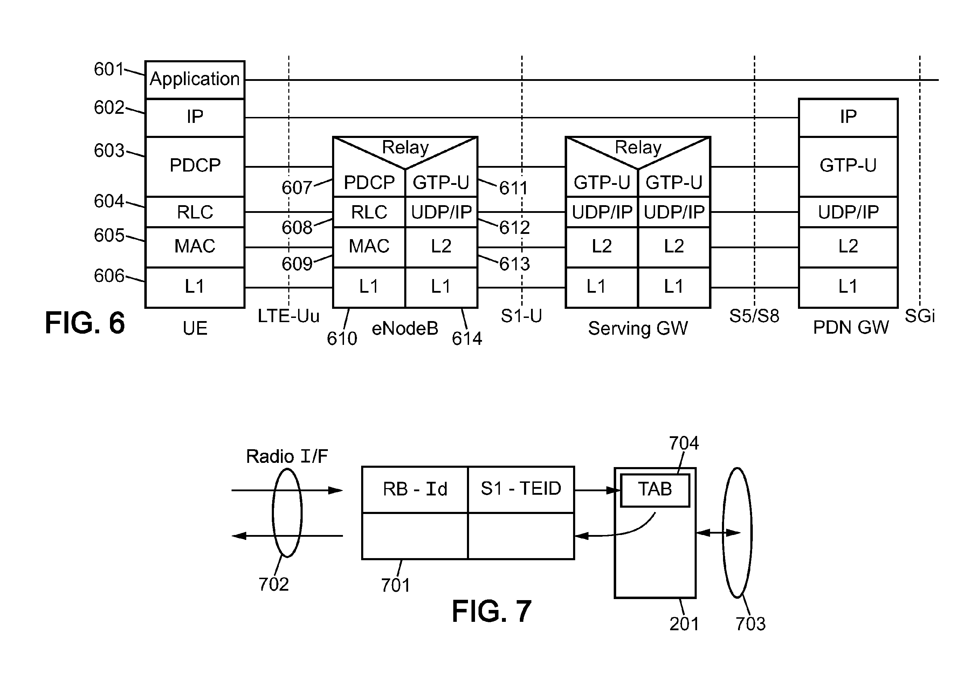

Figure 6 illustrates the different protocol stacks in LTE architecture.

The protocol stack at UE level comprises:
- an application layer 601;
- an IP layer 602;
- a PDCP layer 603;
- an RLC layer 604;
- a MAC layer 605;
- a L1 layer 606.

The protocol stack at a home NodeB comprises:
- a PDCP layer 607 which is mapped to a GTP-U layer 611 (for GPRS Tunnelling Protocol);
- a RLC layer 608 which is mapped to a UDP/IP layer 612;
- a MAC layer 609 which is mapped to a L2 layer 613;
- a L1 layer 610 which is mapped to a L1 layer 614.

The protocol stack at a Serving GateWay corresponds to the layers 614, 613, 612 and 611. The protocol stack at a PDN GW corresponds to these layers also, with more up layer IP.

It can be noted that, in this context of bearer, data packets routing cannot be done on a S1 bearer basis, since S1 bearer can transport data packet destined to different devices. But data packet routing can be carried out on an IP packets basis. The top level IP address is located in the packet transported by PDCP layers 603 and 607 of the protocol stacks in the home network and GTP-U layers 611 etc in the protocol stacks of the core network. This layer GTP-U is called "applicative IP packets" for the following.

When two UEs communicate together, source and destination IP addresses are respectively the IP address of the source and destination UE. These addresses are allocated by the Core network (or 'EPC' for Evolved Packet Core) during bearer activation step. However, looking addresses is not sufficient since UEs may support different applications with respective data flows transported over different bearers having a same IP address as end points.
Figure 7 is a schema to illustrate a mechanism of a local data routing according to an embodiment of the present invention. At the home NodeB level, a mapping is done between the identifiers of radio bearer and the identifiers of S1 bearer. This routing module 201 can be performed after this mapping procedure between radio bearers and S1 bearers. Consequently, only E-RAB (for 'Radio Access Bearer') 43 or S1 bearer 44 are considered at the routing module 201, no need to take into account Radio Bearer. In this condition, such a mechanism can be advantageously the same whatever the location of the routing module, either at the home NodeB level or at a concentrator level for a plurality of home NodeBs. The following sections describe the application of the invention wherein the routing module is located at Home NodeB level but it is so easy to deduce another location, at a concentrator for instance.
Figure 7 illustrates a radio bearer interface 702 and a S1 bearer interface 703. The radio bearer interface 702 is followed by the mapping procedure 701 which is in charge of mapping the radio bearer identifier on a S1 bearer identifier on uplink and vice versa on downlink.

The routing module 201 is in charge of receiving IP packets on S1 bearer and in charge of deciding to forward them towards the core network or to route them towards to the home network by going through the mapping procedure 701 again. The routing module handles a table TAB like the following for example:

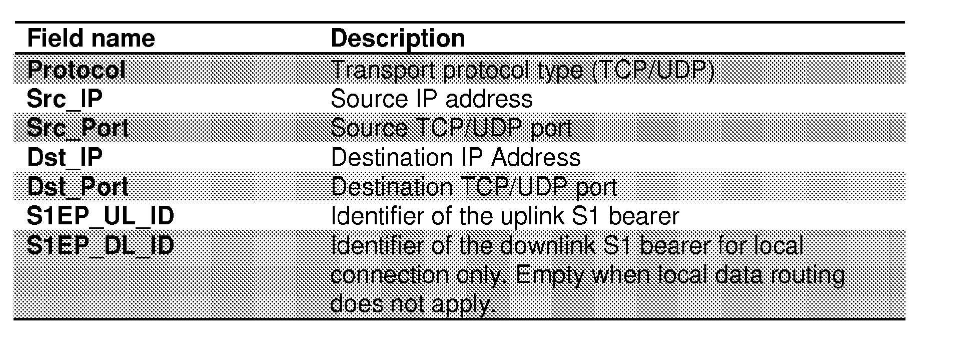

Thus, this table is adapted to associate on one hand the quintuplet of IP packet information and on the other hand the uplink S1 bearer which is stored through its identifier S1EP_UL_ID for 'S1 End Point UpLink IDentifier' and the downlink S1 bearer through its identifier S1EP_DL_ID for 'S1 End Point DownLink IDentifier'.

The field S1EP_UL_ID can be advantageously filled for a given quintuplet when said quintuplet is added in the table for the first time, on reception of the first packet of a given connection on uplink.

The field S1EP_DL_ID can be advantageously filled for a given quintuplet upon reception of the first packet of a connection on downlink, when the entry of said quintuplet already exists in the table. Actually, this field is updated only when a first packet for the same connection has been already received on uplink. Indeed, in this condition, it means that both UEs of this connection is located in the home network of the routing module and then one embodiment of the present invention can be applied.

This mechanism can be carried out easily to any IP protocol, for instance either to TCP protocol or to UDP protocol. The routing module 201 can monitor applicative IP packets; it can track on uplink first packets of TCP connections and UDP flows, and it can associate ports and addresses to the S1 bearer identifier on which they are transported. The term 'connection' corresponds to a TCP connection or a UDP flow.

Each connection is identified by a quintuplet that contains the transport protocol, the source and destination addresses, the source and destination ports. In order to fill this table, it is planned to monitor the received applicative IP packets. Then, according to the type of packets and their direction, either uplink or downlink, the associated quintuplet is extracted from the IP packet, and a lookup is performed in the table in order to determine if this quintuplet is already stored or if it has to be stored. In one embodiment, by default, uplink data packets are forwarded to the core network through their associated S1 bearer identifier. Here, 'by default' means that there is no downlink bearer associated to the quintuplet of a received packet on uplink.

When a connection is performed between two UEs in the same home network, at the beginning, on reception of the first IP packet on uplink, the quintuplet associated to this connection is stored in the table in association with the S1 bearer uplink identifier, and the first IP packet received on uplink are forwarded towards the core network in order to be routed at the core network level. Indeed, until the first data packet is received from the core network on downlink, the routing module 201 does not know the S1 downlink bearer which is associated to this connection. Thus, at least the first data packet received from a UE of the home network to a UE of the same home network is forwarded to the core network. The core network performs a routing, as planned in the prior art and forwards this data packet to the same home network towards the UE which is the recipient of this packet. When this routing is performed at the core network level, the data packet is associated to a S1 downlink bearer. Consequently, the routing module 201 receives this downlink data packet in association to the S1 bearer downlink identifier. The routing module can then detect that this connection is already known by checking if the corresponding entry already exists in the table, on the basis of the quintuplet of the received packet. Then, it can store the S1 bearer identifier in association with the quintuplet as an associated downlink bearer.

At this step, the routing module is able to route locally the data packets received from the UE towards its recipient based on the table indicating an association between the quintuplet of the connection and the S1 bearer downlink identifier.

In a general way, this table is addressed by using a quintuplet, each entry of the table corresponding to a quintuplet.

More precisely, S1 Bearer end points can be identified by the IP address of a GTP-U tunnel end point, and a Tunnel End point Identifier (TEID). The S1 End Point Identifier (S1EP-ID) can correspond to the couple [IP Address, TEID]. In one embodiment, for downlink traffic, the end point corresponds to the home NodeB, while for uplink traffic the end point corresponds to the S-GW. The End point IP address can be found easily in the destination IP address field of the GTP-U packets. TEID is located in GTP-U header. By using this couple instead of just using TEID, the routing module mechanism can support multiple home NodeBs connected through a single Home NodeB Data Concentrator to several different S-GWs.

It could be noted that the S1EP-ID is here different from the S1 Bearer Identifier used in the LTE signalling. S1EP-ID is an identifier allocated for each different GTP-U endpoint. Consequently, for a single bidirectional S1 bearer, there can be two different S1EP-IDs, one for each direction.

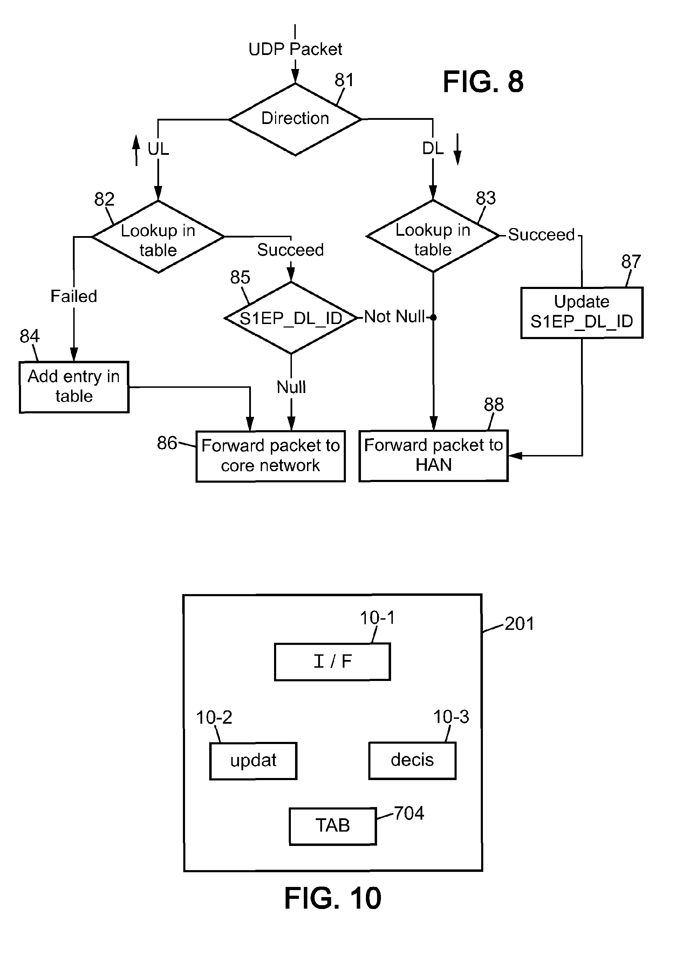

Figure 8 illustrates one embodiment of the present invention for UDP protocol.

At step 81, the direction of a received data packet is determined. Upon reception of a data packet on uplink, at step 82, a lookup is performed in the table based on the quintuplet :
[Protocol=UDP,Src_IP, Src_UDP_Port, Dst IP, Ds_UDP_Port].

If the lookup fails, at step 84, a new record is inserted in the table and is filled with the quintuplet. Moreover, the S1EP_UL_ID field of the table is filled with the identifier of the S1 bearer on which the packet is received. Then, the received data packet is forwarded to the core network at the step 86.

If the lookup in the table succeeds, at step 85, the S1EP_UL_ID field of the table is compared with the S1 bearer on which the packet is received. If they are different or if S1EP_DL_ID field is not yet filled in the table, the received packet is forwarded to the core network 86 and S1EP_UL_ID field is overwritten if necessary. Otherwise, at step 88, the received packet is forwarded to the downlink S1 bearer indicated in the field S1EP̅_DL_ID of the table in association to the considered entry. This last case corresponds to the case where at least one packet was already received from the core network on downlink for this connection.

When at step 81, the received data packet is detected on downlink, a lookup 83 is performed in the table based on the quintuplet:
[Protocol=UDP,Src_IP, Src_UDP_Port, Dst_IP, Dst_UDP_Port]).

If that lookup succeeds, the S1EP_DL_ID field of the corresponding entry in the table is updated at step 88 with the S1 bearer identifier of the S1 bearer on which the data packet is received. The received data packet is then forwarded to the HAN at step 88.

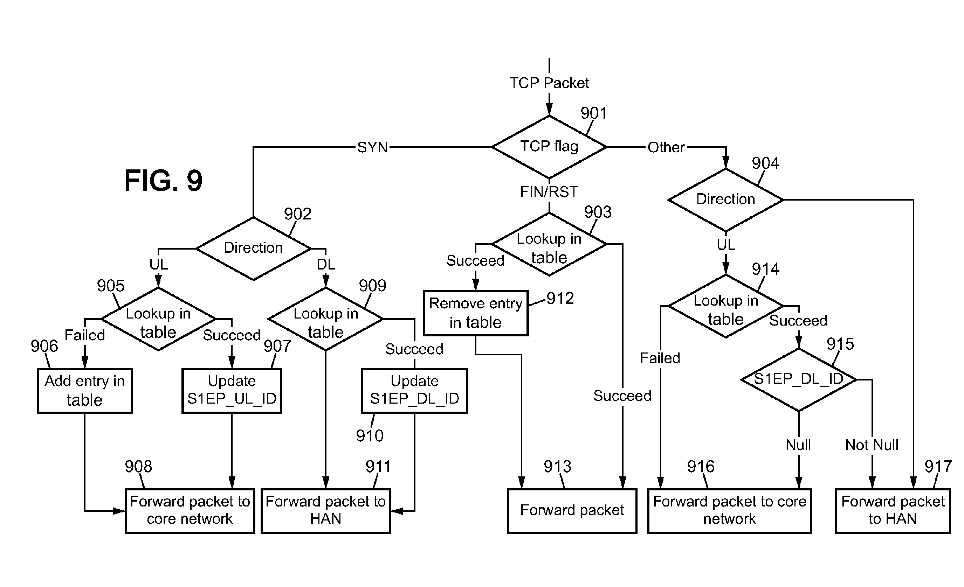

Figure 9 illustrates one embodiment of the present invention for TCP protocol.

As for UDP connection, a new entry is recorded in the table when a new uplink connection is detected based on a control of the quintuplet. This can be done by detecting a TCP initialisation sequence like the following sequence of packets:
- SYN packet ;
- SYNACK packet ;and
- ACK packet.

This can be done also based on a lookup in the table which fails, as for UDP connection.

Moreover, a connection can be removed from the table when a connection is closed. It can be detected on a TCP close sequence like the following sequence of packets:
- FIN packet; and
- FIN ACK packet.

This can be done also when there are no more packets on the connection, meaning when the connection is considered as an inactive connection.

S1EP_UL_ID field can be filled with the identifier of the S1 bearer of the connection on uplink. S1EP_DL_ID field can be left blank until reception of the first packet on downlink corresponding to an existing entry in the table for this connection.

While the S1EP_DL_ID field remains blank, packets are forwarded to the core network within the S1 bearer kept unchanged. In one embodiment of the present invention, it is possible to plan to add two entries in the table for a single connection, one for each direction uplink and downlink.

On figure 9, when a packet is received, at step 901, the TCP flag is checked. If the received packet is a SYN packet, the direction is checked at step 902. For an uplink packet, at step 905, a lookup is performed in the table using the quintuplet:
[Protocol=TCP,Src_IP, Src_TCP_Port, Dst_IP, Dst_TCP_Port].

If the lookup fails, at step 906, a new entry is added in the table filled with the quintuplet of the received packet. The S1EP_UL_ID field is filled with the identifier of the S1 bearer on which the packet is received. If the lookup succeeds, at step 907, the S1EP_UL_ID field is overwritten with the identifier of the S1 bearer on which the packet is received. Then, at step 908, the received packet is forwarded to the core network.

If at step 902, the packet is received on downlink, a lookup is performed in the table using the quintuplet:
[Protocol=TCP,Src_IP, Src_TCP_Port, Dst_IP, Dst_TCP_Port]).

If that lookup succeeds, meaning that the connection is already known on uplink, the S1EP_DL_ID field of the corresponding entry in the table is updated with the identifier of the S1 bearer on which the packet is received.

When at step 901, the received packet is detected as being a FIN or RST TCP packet, a lookup is then performed in the table using the quintuplet of the received packet at step 903:
[Protocol=TCP,Src_IP, Src_TCP_Port, Dst_IP, Dst_TCP_Port].

If the lookup succeeds, the corresponding entry is removed from the table at step 912 and the received packet is forwarded to the core network at step 913.

When, at step 901, the received packet is another type of TCP packet, at step 904, the direction of this packet is checked. If the packet is received on downlink, it is forwarded to the home network at step 917.

If this packet is received on uplink, at step 914, a lookup is performed in the table using the quintuplet:
[Protocol=TCP,Src_IP, Src_TCP_Port, Dst_IP, Dst_TcP_Port]. ).

If the lookup in the table succeeds for this quintuplet, at step 915, the S1EP_UL_ID field stored in association to the considered quintuplet is compared with the S1 bearer indicated in the received packet. If the S1 bearer of the received packet is different from the S1EP_UL_ID field or if S1EP_DL_ID is blank, the packet is forwarded to the core network.

Otherwise, the received packet is forwarded to the downlink S1 bearer indicated by S1EP_DL_ID field of the table at the entry corresponding to the considered quintuplet.

More precisely, this step consists in overwriting GTP-U destination IP address and TEID fields with S1EP_DL_ID, and forwarding it to the home NodeB. If the initial lookup fails, the packet is forwarded to the core network.

A cleaning procedure can be applied to the table in order to maintain only the active connections. As described above, a cleaning procedure based on the type of packets TCP can be advantageously applied to clean the table in case of TCP connection.

The following cleaning procedure can be applied to all types of IP connection. It could be planned to handle a new field per entry in the table: Time field. In one embodiment, when a new entry is added into the table, the Time field is filled with the current time. This field is updated upon each successful lookup on the corresponding entry, meaning each time a packet belonging to the connection is received and forwarded either on uplink or on downlink. A background mechanism can be in charge of removing old entries corresponding to inactive connections, meaning connections where there is no more traffic. This procedure can be advantageously applied to UDP flows and TCP connections, particularly when the TCP connections are not cleanly closed by FIN or RST packets.

In one embodiment of the present invention, it may be useful that the mobile core network can be informed about the proposed mechanism. Indeed, only the data plane could be impacted and signalling procedure used to establish bearers can be kept unchanged. In this condition, the core network could continue to reserve resource for the locally switched traffic, in particular for services that require a Guarantied Bit Rate (GBR). So, it may be interesting to introduce signalling messages to inform the core network that local data traffic is locally switched and not sent through the core network.

For that purpose, a `LOCAL_ROUTING_REQUEST' message could be sent by the routing module to inform the core network about a local routing for a given connection.

Moreover, it could be advantageous to allow the core network to control the local switching module, in order to make it able to prohibit it in some conditions. For that purpose, it could be advantageous to introduce another message to be sent by the core network to the routing module in response of the `LOCAL_ROUTING_REQUEST' message.

Such a message could be a 'LOCAL_ROUTiNG_RESPONSE' message. In this response message, the core network can enable or disable a local routing for a given connection. This core network control could be advantageous for accounting or traffic control purpose notably.

These messages 'LOCAL-ROUTING_REQUEST' and 'LOCAL_ROUTING_RESPONSE' could introduce at least one of the following parameters.

| ERAB_ID | ERAB Identifier |
|---|---|
| Quintuplet | Quintuplet that identifies the connection |
| Enable | Boolean: true if local routing is enabled for the connection identified by the quintupletTFT field. |
| TRAFFIC_STAT | Traffic statistics (Data volume, number of packets...). This parameter is inserted in messages sent by the Home NodeB. |

Thus, in one embodiment of the present invention, the routing module sends to the core network a message LOCAL_ROUTING_REQUEST, indicating, in the field Enable, the true value when a local routing is detected for a given connection.

The core network returns a message LOCAL_ROUTING_ RESPONSE that indicates if the local routing can be performed or not in the Enable field. Until a positive LOCAL_ROUTING_RESPONSE message, meaning with Enable field set as true, no local routing is performed and packets belonging to the considered connection are forwarded to the core network, as in the prior art.

These same messages can be used when a local routing has been accepted by the core network or when a connection is closed, in order to inform the core network. Indeed, in this case, the Home NodeB can send to the core network a LOCAL_ROUTING_REQUEST indicating in the Enable field the false value and the core network acknowledges it by returning to the routing module a LOCAL_ROUTING_RESPONSE indicating an Enable field set at false value. In addition, it is easy to plan to make the core network able to stop local routing at any time by sending itself a LOCAL_ROUTING_REQUEST indicating as Enable field the false value.

A TRAFFIC-STAT field can be inserted in the `LOCAL_ROUTING_REQUEST' message by the routing module to inform the core network about traffic statistics for a given connection, meaning for a given quintuplet. It can be advantageous for accounting and traffic management in the core network.

A mechanism of local routing according to one embodiment of the present invention requires few power processing. Moreover, in order to perform a faster implementation, a hash based on this quintuplet can be computed to access the table.

Thanks to the present invention, services with high bandwidth requirement may be deployed between devices in a LTE architecture. Indeed, transmission resources can be saved between home NodeB and Core Network. Those saved resources could be used for other WAN services.

Figure 10 illustrates a routing module according to one embodiment of the present invention.

The routing module 201 comprises :
- an interface unit 10-1 adapted to receive a packet from the home Node B or from the core network;
- an updating unit 10-2 adapted to update a table storing quintuplets in association to respective uplink and downlink bearers, on the basis of received packets ;
- a routing decision unit 10-3 adapted to decide, if a quintuplet associated to a received packet is already stored in the table with an associated downlink bearer, to forward said received packet through said associated downlink bearer.

This routing module comprises also a memory to store the table TAB 704.

This routing decision unit 10-3 can be further adapted, if the quintuplet associated to the received packet is not already stored in the table with an associated downlink bearer, to decide to forward the received packet to the core network through the uplink bearer associated to the received packet.

The updating unit 10-2 can be adapted to :
- upon reception of a packet from the home NodeB and if the quintuplet associated to said received packet is not already stored in the table, store this quintuplet as a new entry of the table in association with the uplink bearer associated to the received packet; and
- upon reception of a packet from the core network and if the quintuplet associated to said received packet is already stored in the table, store the downlink bearer associated to said received packet in association to said quintuplet in the table.

This routing module can be adapted to receive IP packets from a plurality of home NodeBs each of said IP packets comprising a corresponding GTP-U packet; and adapted to forward received IP packets to any home NodeB of said plurality on the basis of a Tunnel End point Identifier and an IP address indicated in the corresponding GTP-U packet.

## Claims

1. Method for routing IP packets in a mobile network, the mobile network having a core network (105) and a home network (106) corresponding to at least one home NodeB (101), said core network and said home NodeB being linked through a routing module (201);
packets being transmitted in the mobile network through uplink bearers or downlink bearers;
each transmitted packet being associated, on one hand, to a quintuplet indicating a source IP address, a destination IP address, a source IP port, a destination IP port, and a type of transport protocol used over IP, and, on the other hand, to an uplink or downlink bearer through which said packet is received ;
based on received packets, the routing module (201) updating a table adapted to store quintuplets in association to respective uplink and downlink bearers; said method comprising the following steps at said routing module:
/a/ receiving (21) a packet from the home Node B; and
/b/ if the quintuplet associated to said received packet is already stored in the table (22) with an associated downlink bearer (23), performing (24) a local routing by forwarding the received packet through said associated downlink bearer.

2. Method for routing IP packets according to claim 1, wherein, at step /b/, if the quintuplet associated to the received packet is not already stored in the table with an associated downlink bearer, forwarding (25) the packet to the core network through the uplink bearer associated to the received packet.

3. Method for routing IP packets according to claim 1 or 2, wherein the routing module (201) updates the table according to the following steps:
/i/ upon reception of a packet from the home NodeB and if the quintuplet associated to said received packet is not already stored in the table, storing this quintuplet as a new entry of the table in association with the uplink bearer associated to the received packet;
/ii/ upon reception of a packet from the core network and if the quintuplet associated to said received packet is already stored in the table, storing the downlink bearer associated to said received packet in association to said quintuplet in the table.

4. Method for routing IP packets according to any one of the preceding claims, wherein the routing module (201) is able to received IP packets from a plurality of home NodeBs; each of said IP packets comprising a corresponding GTP-U packet and
wherein, at step /a/, the packet is received from a first home NodeB of said plurality and, at step /b/, the packet is forwarded towards a second home NodeB of said plurality, on the basis of a Tunnel End point Identifier and an IP address indicated in the corresponding GTP-U packet.

5. Method for routing IP packets according to any one of the preceding claims, wherein the table further comprises a Time field in association to each quintuplet, said Time field being updated for a given quintuplet with a current time reference each time a packet associated to said given quintuplet is received at the routing module; and
wherein a quintuplet is removed from the table when the corresponding Time field indicates a current time reference older than a determined value.

6. Method for routing IP packets according to any one of the preceding claims, wherein a quintuplet indicates the TCP protocol as type of used protocol; and
wherein a downlink bearer and an uplink bearer are stored in the table in association to a quintuplet only upon reception of TCP SYN or SYN ACK packets on downlink and on uplink.

7. Method for routing IP packets according to claim 5, wherein a quintuplet is removed from the table upon reception of a TCP FIN or RST packet associated with said quintuplet.

8. Method for routing IP packets according to any one of the preceding claims, said method further comprising the following step before performing the local routing:
- sending a message informing the core network about said local routing.

9. Method for routing IP packets according to any one of the preceding claims, said method further comprising the following step before performing the local routing:
- sending to the core network a message requesting if the local routing is allowed;
- receiving a response message indicating if said local routing is allowed;
wherein the local routing is performed only if core network allows it.

10. Routing module (201) adapted to route IP packets in a mobile network, the mobile network having a core network (105) and a home network (106) corresponding to at least one home NodeB (101), said core network and said home NodeB being linked through said routing module;
packets being transmitted in the mobile network through uplink bearers or downlink bearers;
each transmitted packet being associated, on one hand, to a quintuplet indicating a source IP address, a destination IP address, a source IP port, a destination IP port, and a type of transport protocol used over IP, and, on the other hand, to an uplink or downlink bearer through which said packet is received ;
said routing module comprising:
- an interface unit (10-1) adapted to receive a packet from the home Node B or from the core network;
- an updating unit (10-2) adapted to update a table storing quintuplets in association to respective uplink and downlink bearers, on the basis of received packets ;
- a routing decision unit (10-3) adapted to decide, if a quintuplet associated to a received packet is already stored in the table with an associated downlink bearer, to forward said received packet through said associated downlink bearer.

11. Routing module (201) according to claim 10, wherein the routing decision unit (10-3) is further adapted, if the quintuplet associated to the received packet is not already stored in the table with an associated downlink bearer, to decide to forward the received packet to the core network through the uplink bearer associated to the received packet.

12. Routing module (201) according to claim 10 or 11, wherein the updating unit (10-2) is adapted to :
- upon reception of a packet from the home NodeB and if the quintuplet associated to said received packet is not already stored in the table, store this quintuplet as a new entry of the table in association with the uplink bearer associated to the received packet; and
- upon reception of a packet from the core network and if the quintuplet associated to said received packet is already stored in the table, store the downlink bearer associated to said received packet in association to said quintuplet in the table.

13. Routing module (201) according to any one of claims 10 to 12, adapted to receive IP packets from a plurality of home NodeBs, each of said IP packets comprising a corresponding GTP-U packet; and adapted to forward received IP packets to any home NodeB of said plurality on the basis of a Tunnel End point Identifier and an IP address indicated in the corresponding GTP-U packet.

14. Home NodeB (101) in a mobile network having a core network (105) and a home network (106) corresponding to at least said home NodeB, said core network and said home NodeB being linked through a routing module according to any one of claims 10 to 13 ;
packets being transmitted in the mobile network through uplink bearers or downlink bearers;
each transmitted packet being associated, on one hand, to a quintuplet indicating a source IP address, a destination IP address, a source IP port, a destination IP port, and a type of transport protocol used over IP, and, on the other hand, to an uplink or downlink bearer through which said packet is received ;
said Home NodeB comprising said routing module.

15. Mobile network for routing IP packets in a mobile network, the mobile network having a core network (105) and a home network (106) corresponding to at least one home NodeB (101), said core network and said home NodeB being linked through a routing module (201) according to any one of claims 10 to 13;
packets being transmitted in the mobile network through uplink bearers or downlink bearers;
each transmitted packet being associated, on one hand, to a quintuplet indicating a source IP address, a destination IP address, a source IP port, a destination IP port, and a type of used IP protocol, and, on the other hand, to an uplink or downlink bearer through which said packet is received.
